(19) Europäisches Patentamt
European Patent Office
Office européen des brevets

(11) **EP 2 995 709 A1**

(12) **EUROPEAN PATENT APPLICATION**
published in accordance with Art. 153(4) EPC

(43) Date of publication:
**16.03.2016 Bulletin 2016/11**

(51) Int Cl.:
***D06B 23/00*** (2006.01)

(21) Application number: **13884293.5**

(22) Date of filing: **06.05.2013**

(86) International application number:
**PCT/CN2013/075225**

(87) International publication number:
**WO 2014/179930 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fong's National Engineering (Shenzhen) Co., Ltd.**
**Shenzhen, Guangdong 518114 (CN)**

(72) Inventor: **TSUI, Tak Ming William**
**Hong Kong (CN)**

(74) Representative: **Stuttard, Garry Philip**
**Urquhart-Dykes & Lord LLP**
**Tower North Central**
**Merrion Way**
**Leeds LS2 8PA (GB)**

(54) **DETECTING AND CONTROLLING METHOD FOR RINSING PROCEDURE OF DYEING MACHINE**

(57) A monitoring and control method for rinsing on a dyeing machine, wherein the steps are: guiding the dye liquor into the color detection chamber; a light emitter emits a light beam, said light beam pierces through the dye in said chamber and being received by a receiver; the receiver connects to the main control system where the data sent is analyzed to determine the dye concentration; said control system chooses from different drainage ways according to the concentration. The present invention collects color data in real time to monitor the dye liquor, to control the dyeing and rinsing process of a dyeing machine via the computer, which could be widely applicable in dyeing and rinsing recipes.

Figure 2

## Description

## Scope of invention

This invention relates to a monitoring technique in fabric dyeing, in particular a method for rinsing control in dyeing process.

## Background of invention

In ordinary fabric dyeing technique, fabric is dyed by dye liquor inside a vessel. The dye liquor is drained after dyeing yet there is always residue remained on the fabric. Cleansing agent is filled into the vessel to wash away the dye on the fabric. This process is repeated until the fabric is clean to unload. However the knowhow to determine the color during dyeing and rinsing is so important that it would affect the quality and production cost. In traditional ways, one relies on past experience to decide the quantity of dye or cleansing agent and the process duration, yet it is not precise and unrepeatable.

Researches discovered that the sodium chloride level in dye liquor is directly related to its concentration, and the way is simple to track this level, such that there already have been a method to monitor chloride level in real time during rinsing and estimate its concentration. When it breaches certain level the rinsing process will repeat until it is diluted. However the same level in two different colors may represent different concentration. The above method has a defect that cannot truly reflect the concentration of dye liquor.

Thus the dyeing industry is desperate for a new measurement adaptable in pressurized environment to monitor dye concentration.

## Details of invention

The present invention is introduced to address the above problem and to provide a new rinsing control and monitoring method.

The steps of the present invention are:

> Firstly introduce dye liquor to a measuring chamber from the vessel containing dye liquor on a dyeing machine,
> Secondly a light beam emitted from a lighting device pierces through the chamber and the dye liquor within while a receiver gathers the refracted rays,
> Thirdly a control system analyzes the signal sent from the receiver and defines the concentration by its color.

The control system would selectively drain out the vessel in different pipes judging by the liquor concentration or other indicators configured.

The control system could also execute various actions when the required concentration is reached.

The monitoring and control method for rinsing process on a dyeing machine in this invention is characterized in that the light source from the device is a white LED light.

The monitoring and control method for rinsing process on a dyeing machine in this invention is characterized in that the said receiver is a RGB sensor.

The monitoring and control method for rinsing process on a dyeing machine in this invention is characterized in that the measuring chamber has valves on both inlet and outlet, such that the chamber is sealed for a period of time before it reopens, to discretely measure dye samples.

The monitoring and control method for rinsing process on a dyeing machine in this invention is characterized in that the dye liquor is a kind of water solvent for fabric cleansing.

The monitoring and control method for rinsing process on a dyeing machine in this invention is characterized in that the preset concentration value for triggering functions is saved and controlled by computer.

Differing from recent technologies, the present method gather color data in real time to precisely compute and predict dye color's change through time.

The visible spectrum is formed by three basic colors: red, green and blue. The color data recorded is also represented by these indicators. The changes in these indicators represent the color change. For instance, dye liquor is injected into the vessel in dyeing process, and the color keeps changing from a color A to another color B eventually, represented in the following way:

$$A = (a_1, a_2, a_3)$$

$$B = (b_1, b_2, b_3)$$

In form of a matrix, the RGB index is recorded wherein the three elements in the matrix respectively represent the RGB value. Assume $a_1$ and $b_1$ are correspondingly the red index from color A and B, the difference between two values is the variance of red index. Since the quantity of solvent and dye are known as well as the duration, a mathematical model can be formed base on the above factors to show the influence of different dye on changing the liquor color, and show the relationship between solvent, dye and time. The algorithm is stored in the operation system representing the characteristics of dyes such that time and dosage can be estimated for desired color.

A RGB sensor in the control circuit is used for monitoring the RGB index of dye. It is a light sensor that gathers light refracted from the dye and converts into three voltage signals ($v_1$, $v_2$, $v_3$). A mathematic model can be constructed by massive collection of data and statistical analysis. For instance the color index ($a_1$, $a_2$,

$a_3$) representing a color A, its function can be written as:

$$a_1 = f_1(v_1, v_2, v_3)$$

$$a_2 = f_2(v_1, v_2, v_3)$$

$$a_3 = f_3(v_1, v_2, v_3)$$

In other words, the controller can compute the RGB index of dye by reading the voltage signals. However the received light beams are affected by the intensity of original white rays. Given the same color of dye, the receiver would have different readings if the light intensity is changed, and wrongly recognize as a darker or brighter color, making an error. Hence the intensity factor is considered in the math model such that the computed value has a compensation included for a precise result. It could be further interpreted as:

$$a_1 = f_1(v_1, v_2, v_3, x)$$

$$a_2 = f_2(v_1, v_2, v_3, x)$$

$$a_3 = f_3(v_1, v_2, v_3, x)$$

where x is the current required for the light ray, as the size of electric current is proportional to the light intensity, and it is a kind of electrical signal recordable in a control system. Hence the calculation of RGB index requires the voltage signals from the sensor and the current value as one of the variables in the algorithm.

The present invention detects the RGB index of dye liquor to monitor its status, and implement control to its dyeing and rinsing process via the computer.

Traditionally in dyeing and finishing process, men uses their eyes to determine whether should the rinsing process end, a different decision can be made even in several patches of same color. The present invention uses a digital way to present a color value which creates a clear definition for every preset action. Only when certain conditions are fulfilled, the dyeing machine will run according to preset parameters. For example, by setting an end point of rinsing process as a fixed color C: ($c_1$, $c_2$, $c_3$). When the rinsing process is running, the concentration decreases and the color becomes paler. When the reading from color detector has the same value as the preset value, i.e. it matches $c_1$, $c_2$ and $c_3$, the system defines an end of rinsing and execute any related actions, like shutting injection valves of cleansing agent.

The major feature of this invention is utilizing refracted ray for data analysis to compute the dye concentration, the precision is proven a lot better than existing techniques.

The present invention can directly obtain color data for the reference of dyeing and cleansing, raising and reliability and precisely predicts the usage of dye and cleansing agent, prevents unnecessary consumption, saves cost.

**Description of figures**

Figure 1 is the embodiment of the present invention.
Figure 2 is the diagram showing the present invention applying on a dyeing machine.
Figure 3 is the diagram showing the prevent invention in control of multiple drainage valves on a dyeing machine.

Wherein:

1. Monitoring device
2. Measurement chamber
3. Chamber inlet
4. Chamber outlet
5. (Incl. 5A, 5B) glass
6. Cleansing pipe
7. Light beam emitter
8. Light beam receiver
9. Inner flange
10. Outer flange
11. Gasket
12. Silicone seal
13. Dyeing machine
14. Dye circulation
15. Controller
16. Filter
17. Fill valve
18. Drain valve
19. Second drain valve

**Description of embodiment**

The following further describes the present invention by figures and embodiments.
The embodiment of the present invention is realized by a color monitoring system on a dyeing machine.

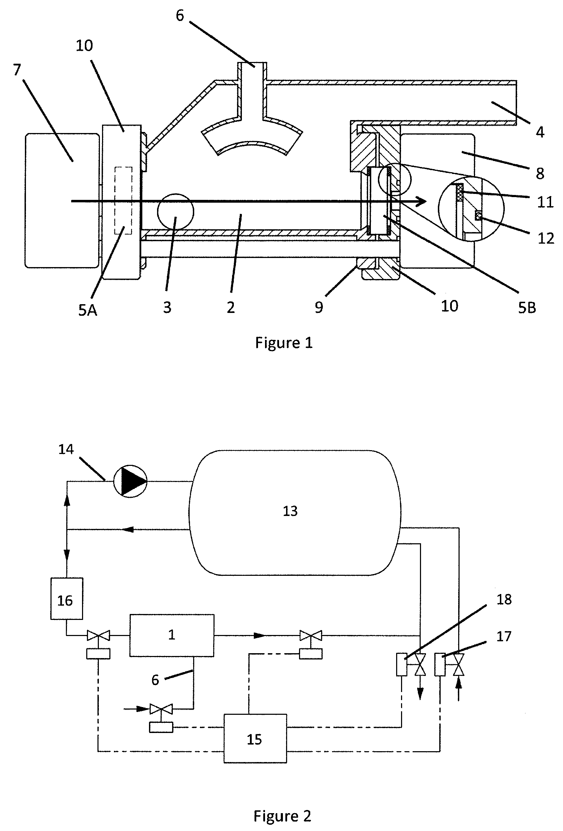

Figure 1 is a cross-sectional view of the device used in this embodiment.
In figure 1, a chamber inlet (3) is located at one side of the wall of measurement chamber (2), while the chamber outlet (4) is at the ceiling of said chamber. There are inner flanges (9) on both sides of chamber, where a pair of outer flanges (10) fits with them and connect to each other with screws. There are glasses (5A) and (5B) between the inner flange and outer flange, and there are also gaskets (11) between the glass and each flange to prevent leakage. There are light beam emitter (7) and light beam receiver (8) on the outer sides of outer flanges. A silicone ring (12) is placed between the outer flange and the light beam emitter, as well as the other end on the light beam receiver. (The outer flange on left hand side is in general appearance while the right hand side is sectioned.) A cleansing pipe (6) is connected to the ceiling of measurement chamber.

The chamber inlet and outlet connect to the dye circulation of a dyeing machine, where the additional pipeline forms a secondary circulation in part of the main one. The chamber inlet and outlet are positioned respectively on a side and at the top such that when dye liquor enters the chamber, the light ray emitted from the light beam emitter (7) pierces through glass (5A) and the dye in chamber, and is received by the light beam receiver (8) via glass (5B) on the opposite side of chamber. The arrow in figure 1 points the light ray travelling direction.

The chamber inlet connects to the dye circulation. Dye liquor enters the chamber via the inlet, as a batch of sample for the color detection device. The dye leaves the chamber via the outlet (4).

As shown by the arrow in figure 1, when the chamber is filled with dye liquor, the light beam emitted from the emitter travels along the way from the hole in middle of outer flange, the mirror, the hole on inner flange, the dye liquor, to the other end of chamber with holes and glass, eventually received by the receiver (8). The information gathered is processed by the controller for further analysis.

The embodiment applies color detection on dyeing machines, integrating with the computer to control and adjust dye liquor by color data, whilst executing any preset actions or programs.

The above actions include any functional execution, for example, a drain step controlled by color recognition. The liquor in a vessel could be drained in separated channel, by configuring multiple outlets connected to the vessel such that the liquor could be processed by different concentration in time. Drained liquor in low concentration can even be recycled to lower the drainage treatment cost. In other words, the concentration of liquor is measured by its color and the liquor itself is diverted into corresponding outlets by its varying concentration in time, controlled by the computer. To implement such a way, one outlet could be opened for draining once the rinsing process starts, where the dye concentration at the moment is considerably high. When the liquor is diluted, another drainage outlet is used. Hence the treatment could be simplified.

To further illustrate the action, an embodiment is explained. Whenever the fabric is dyed, the liquor concentration in the vessel is often high, which is also reflected from the color detection device. The controller executes a default rinsing program, wherein the action is to open the fill valve and drain valve simultaneously. The liquor is diluted whilst the circulation pump stirs the liquor in the vessel. The data recorded on the color detection device keeps changing as the liquor is diluted. A default value is set in the controller such that when said device read the same value, the rinsing program stops. Then the liquor concentration is said to reach the required level, in other words rinsing is complete. The aforesaid color value is set by the operator such that the same rinsing result can be achieved in the next batch, hence automation is fulfilled.

In the embodiment shown in figure 2, there is a dyeing machine (13) with a color detection device (1). Said dyeing machine includes a vessel containing dye liquor and fabric, wherein the vessel has a dye circulation (14) to let liquor flow inside the machine, and a circulation pump to drive the liquor flow. A filter (16) is installed in the circulation before liquor flowing into the color detection device, filtering the lint from the system.

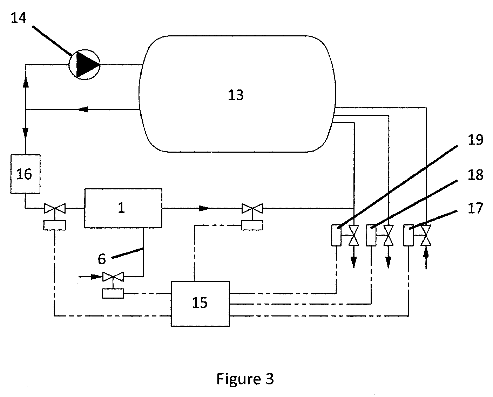

The dyeing vessel connects to a fluid inlet that is used for injecting dye liquor, cleansing agents or any other chemicals; and a fluid outlet for discharge. Said inlet and outlet have respectively an inlet valve (17) and an outlet (18), wherein their switches are connected to the controller of dyeing machine (15). The color detection device lies on the dye circulation such that dye liquor could pass through the system. Said device read the color data and send it to the central processing unit where the algorithm converts the data into relative commands to control the valves. The relation between color data and valve opening can be altered by changing coefficients in the mathematic model for desired effects. Figure 3 shows a configuration of dyeing machine having two draining valves. Having more than one draining valve could enhance the applicability of color detection system. It is applied by diagnosing the dye color inside the detection chamber to determine the valve action, particularly in dyeing and draining process. For instance, a preset color D: $(d_1, d_2, d_3)$. The color detection device sends the RGB value of dye instantly recorded to the control system, until the measured value matches the RGB index of color D, i.e. $d_1$, $d_2$ and $d_3$. The system then terminates the process and executes any actions related to the termination, for example valves are involved as shown in figure 3. By controlling valves base on color recognition, one could change or maintain the status of dye effectively.

For example, to set a valve being opened when certain color level is reached, allowing external solvent to enter the system and change the liquor nature is considered an automated dye conditioning. By understanding the relation between dye color and its chemical status, one could judge precisely the situation and inject additives according to the recipe in specific moment, instead of determining the right time by human observation which causes error. Vice versa, a valve could be closed when certain color level is reached, to separate the dye from external influences which may further cause changes to the dye, maintaining it in desired condition, so as to execute common processes like dyeing and rinsing.

In figure 3, one injection point and two drainage points are configured in the dye circulation system, controlled by fill valve (17), drainage valve (18) and second drainage valve (19) respectively. The three valves are controlled by the controller (15), and the dye condition can be altered by the combination of switches between these valves, determined by the color value read from the color detection device. For example, to use different drainage valve for draining dye in different color, meanwhile opening the fill valve to dilute the solvent in rinsing. These are foreseeable for a person in the field, where the key is the control relationship between color detection and the use of actuators on the machine. Undoubtedly in the central processing unit of a dyeing machine, it is not only the valves being controlled. Any actuators other than valves can also be a terminal device serving for the color detection system. For example, a lamp for indication is also a common design. The present invention can also be considered as a sensor on a dyeing machine.

**Claims**

1. A monitoring and control method for rinsing process on a dyeing machine, wherein the steps are:

   Firstly introduce dye liquor to a measuring chamber from the vessel containing dye liquor on a dyeing machine,
   Secondly a light beam emitted from a lighting device pierces through the chamber and dye liquor within while a receiver gathers the refracted rays,
   Thirdly the receiver connects to the control system, where the signal is analyzed and defines the concentration by its color.
   The control system would selectively drain out the vessel in different pipes judging by the liquor concentration or other indicators configured.
   The control system could also execute various actions when the required concentration is reached.

2. The monitoring and control method for rinsing process on a dyeing machine according to claim 1, **characterized in that** the light beam emitted from the lighting device is a white LED light.

3. The monitoring and control method for rinsing process on a dyeing machine according to claim 1, **characterized in that** the said receiver is a RGB sensor.

4. The monitoring and control method for rinsing process on a dyeing machine according to claim 1, **characterized in that** the measuring chamber has valves on both ends, such that the chamber is sealed for a period before it reopens, to measure discrete color samples.

5. The monitoring and control method for rinsing process on a dyeing machine according to claim 1, **char-**acterized in that** the dye liquor is a kind of water solvent for fabric cleansing.

6. The monitoring and control method for rinsing process on a dyeing machine according to claim 1, **characterized in that** the preset concentration value to trigger actions is saved and controlled by computer.

7. The monitoring and control method for rinsing process on a dyeing machine according to claim 1, **characterized in that** the steps are included that the detector is calibrated, when dye liquor is injected into the measuring chamber before start and after finish every batch dyeing process.

Figure 1

Figure 2

Figure 3

# INTERNATIONAL SEARCH REPORT

| | International application No. |
|---|---|
| | PCT/CN2013/075225 |

### A. CLASSIFICATION OF SUBJECT MATTER

D06B 23/00 (2006.01) i

According to International Patent Classification (IPC) or to both national classification and IPC

### B. FIELDS SEARCHED

Minimum documentation searched (classification system followed by classification symbols)

IPC: D06B; G01N

Documentation searched other than minimum documentation to the extent that such documents are included in the fields searched

Electronic data base consulted during the international search (name of data base and, where practicable, search terms used)

CNPAT, CNKI, WPI, EPODOC: dye, wash, thick+, light, control, gaug+, send+, receiv+, thickness

### C. DOCUMENTS CONSIDERED TO BE RELEVANT

| Category* | Citation of document, with indication, where appropriate, of the relevant passages | Relevant to claim No. |
|---|---|---|
| X | CN 1656275 A (LORIS BELLINI S. P. A.) 17 August 2005 (17.08.2005) description, page 2, line 1 to page 5, line 14 and figures 1 and 2 | 1-7 |
| A | CN 201424579 Y (LIU, Xiaohao) 17 March 2010 (17.03.2010) the whole document | 1-7 |
| A | CN 102560940 A (ZHEJIANG SCI-TECH UNIVERSITY) 11 July 2012 (11.07.2012) the whole document | 1-7 |
| A | CN 202430470 U (ZHEJIANG SCI-TECH UNIVERSITY) 12 September 2012 (12.09.2012) the whole document | 1-7 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 January 2014 (16.01.2014) | 20 February 2014 (20.02.2014) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHAO, Xiaomin Telephone No. (86-10) 82245263 |
|---|---|

Form PCT/ISA /210 (second sheet) (July 2009)

## INTERNATIONAL SEARCH REPORT
### Information on patent family members

| | | | International application No. |
| --- | --- | --- | --- |
| | | | PCT/CN2013/075225 |

| Patent Documents referred in the Report | Publication Date | Patent Family | Publication Date |
| --- | --- | --- | --- |
| CN 1656275 A | 17.08.2005 | WO 03102288 A1 | 11.12.2003 |
| | | AU 2003238360 A1 | 19.12.2003 |
| | | EP 1540063 A1 | 15.06.2005 |
| | | US 2005172679 A1 | 11.08.2005 |
| | | INKOLNP 200401857 E | 04.08.2006 |
| | | DE 60310094 E | 11.01.2007 |
| | | IT 1339355 B | 20.04.2007 |
| | | ITMI 20021192 A1 | 01.12.2003 |
| | | AT 346970 T | 15.12.2006 |
| | | PT 1540063 E | 28.02.2007 |
| | | ES 2276071 T3 | 16.06.2007 |
| CN 201424579 Y | 17.03.2010 | None | |
| CN 102560940 A | 11.07.2012 | None | |
| CN 202430470 U | 12.09.2012 | None | |

Form PCT/ISA /210 (patent family annex) (July 2009)